# EUROPÄISCHE PATENTSCHRIFT

(11) **EP 2 536 607 B1**
(45) Veröffentlichungstag und Bekanntmachung des Hinweises auf die Patenterteilung: **22.02.2017**
(21) Anmeldenummer: 10796358.9
(22) Anmeldetag: 15.12.2010
(51) Int. Cl.: B60T 8/48, B60T 8/44, B60T 13/74

(54) **VERFAHREN ZUM BETREIBEN EINES HYDRAULISCHEN BREMSSYSTEMS EINES FAHRZEUGS UND STEUERVORRICHTUNG FÜR EIN HYDRAULISCHES BREMSSYSTEM EINES FAHRZEUGS**
METHOD FOR OPERATING A HYDRAULIC BRAKE SYSTEM OF A VEHICLE AND CONTROL DEVICE FOR A HYDRAULIC BRAKE SYSTEM OF A VEHICLE
PROCÉDÉ PERMETTANT DE FAIRE FONCTIONNER UN SYSTÈME DE FREINAGE HYDRAULIQUE D'UN VÉHICULE ET DISPOSITIF DE COMMANDE POUR UN SYSTÈME DE FREINAGE HYDRAULIQUE D'UN VÉHICULE

(30) Priorität: 15.02.2010 DE 102010001943
(43) Veröffentlichungstag der Anmeldung: 26.12.2012
(73) Patentinhaber: Robert Bosch GmbH, 70442 Stuttgart (DE)
(72) Erfinder: KNEIP, Frank, 74360 Ilsfeld (DE)
(86) Internationale Anmeldenummer: PCT/EP2010/069700
(87) Internationale Veröffentlichungsnummer: WO 2011/098176

(56) Entgegenhaltungen:
- EP-A1- 2 103 493
- EP-A2- 0 317 182
- WO-A1-96/02409
- WO-A1-96/39318
- WO-A1-2011/020637
- WO-A2-97/21570
- DE-A1- 3 910 285
- DE-A1- 4 222 954

## Beschreibung

Die Erfindung betrifft ein Verfahren zum Betreiben eines hydraulischen Bremssystems eines Fahrzeugs. Des Weiteren betrifft die Erfindung eine Steuervorrichtung für ein hydraulisches Bremssystem eines Fahrzeugs.

### Stand der Technik

In der DE 196 51 153 B4 ist eine hydraulische Bremsanlage beschrieben. Bei der hydraulischen Bremsanlage ist es möglich, mittels zweier dem Hauptbremszylinder nachgeschalteter Trennventile die vier Radbremszylinder während einer Fremdkraftbremsung von dem Hauptbremszylinder abzukoppeln. Nach dem Abkoppeln der vier Radbremszylinder soll mittels eines Bremsaggregats aus einem Pumpenantriebsmotor, mindestens einer Hydropumpe und mindestens einem Hydrospeicher ein Radbremsdruck radindividuell in jedem der vier Radbremszylinder einstellbar sein. Zusätzlich wird in der DE 196 51 153 B4 ein Aufbau eines Hauptbremszylinders beschrieben, welcher eine Nutzung des Hauptbremszylinders nach einem Abkoppeln der vier Radbremszylinder als Pedal-Simulator ermöglichen soll.

Die DE 39 10 285 A1 beschreibt eine hydraulische Bremsanlage für Kraftfahrzeuge mit einer Einrichtung zur Regelung des Antriebsschlupfes. Das Verhindern eines Blockierens der Räder ist jedoch erst ausführbar, sobald das Pedal betätigt wird. Die Regelung des Antriebsschlupfes ist auch nur so lange ausführbar, bis das Pedal aufgrund einer Beendigung der Pedalbetätigung durch den Fahrer in seine Grundstellung zurück verstellt ist.

In der WO 96/02409 A1 ist eine hydraulische Bremsanlage für Kraftfahrzeuge mit einer Einrichtung zur Regelung des Antriebsschlupfes beschrieben. Bei einer Fremdbetätigung eines pneumatischen Bremskraftverstärkers der hydraulischen Bremsanlage wird das Bremspedal mitgeführt.

Des Weiteren ist in der WO 96/39318 A1 eine Fahrzeugbremse mit einer elektrisch aktuierbaren Druckerzeugungseinrichtung beschrieben.

### Offenbarung der Erfindung

Die Erfindung schafft ein Verfahren zum Betreiben eines hydraulischen Bremssystems eines Fahrzeugs mit den Merkmalen des Anspruchs 1 und eine Steuervorrichtung für ein hydraulisches Bremssystems eines Fahrzeugs mit den Merkmalen des Anspruchs 5.

Mittels der vorliegenden Erfindung ist es möglich, durch ein "Entkoppeln" des Hauptbremszylinders von dem damit verbundenen Bremsmediumreservoir sicherzustellen, dass ein in dem mindestens einen Radbremszylinder aufgebauter Unter- oder Überdruck nicht über eine Bremsmediumverschiebung aus dem Bremsmediumreservoir oder in das Bremsmediumreservoir ausgeglichen wird. Somit besteht die Möglichkeit, über ein Betreiben des mindestens einen Bremsmedium-Förderelements einen gewünschten Druck radindividuell in dem jeweiligen Radbremszylinder einzustellen. Auf diese Weise ist ein gewünschtes Bremsmoment auf das mindestens eine dem jeweiligen Radbremszylinder zugeordnete Rad des Fahrzeugs ohne eine Bremskraftausübung des Fahrers ausführbar. Mittels der vorliegenden Erfindung kann somit auf das mindestens eine Rad ein Bremsmoment ausgeübt werden, ohne dass der Fahrer dazu eine bestimmte Bremskraft und/oder einen entsprechenden Bremsweg über ein Bremseingabeelement ausüben muss.

Gleichzeitig ist, wie anhand der nachfolgenden Ausführungsformen genauer erläutert wird, mittels der vorliegenden Erfindung die Druckänderung im mindestens einen Radbremszylinder des Fahrzeugs einstellbar, ohne dass der Fahrer davon über eine Rückwirkung spürt. Insbesondere ist ein aktiver Druckaufbau so realisierbar, dass der Fahrer kein "Mitziehen" oder "Reinziehen" des Bremseingabeelements, beispielsweise des Bremspedals, bemerkt. Zusätzlich kann der Fahrer auch während eines Ausführens des erfindungsgemäßen Verfahrens aktiv und direkt in den mindestens einen Radbremszylinder "hineinbremsen".

Das im Weiteren beschriebene Verfahren und die entsprechende Steuervorrichtung sind zum Ausführen verschiedener Fremdkraftbremsungen und/oder Fremddruckaufbauvorgängen (Bremsdruckerhöhungen) anwendbar. Unter einer Fremdkraftbremsung wird beispielsweise ein Abbremsen mindestens eines Rads eines Fahrzeugs verstanden, wobei der dazu in dem zugehörigen Radbremszylinder aufgebaute Druck nicht auf eine Fahrerbremskraft und/oder eine Unterstützungskraft eines Bremskraftverstärkers ausschließlich zurückzuführen ist. Beispiele für derartige Fremdkraftbremsungen oder Bremsdruckerhöhungen sind automatische Notbremsprogramme, ACC, Bremsscheibenwischer und/oder ein Vorbefüllen der Radbremszylinder. Entsprechend ist die hier beschriebene Erfindung auch für einen (autonomen, automatischen) Bremsdruckaufbau einsetzbar.

In einer vorteilhaften Ausführungsform des Verfahrens wird das mindestens eine Abdichtelement derart in die Abdichtstellung verstellt, dass die mindestens eine Schnüffelbohrung des Hauptbremszylinders abgedeckt wird. Dies gewährleistet ein verlässliches Abkoppeln des Hauptbremszylinders von dem Bremsmediumreservoir. Somit ist gewährleistet, dass über den mindestens einen Verbindungskanal des Hauptbremszylinders zu dem Bremsmediumreservoir, welcher in die mindestens eine Schnüffelbohrung mündet, keine Bremsmediumverschiebung zwischen dem Hauptbremszylinder und dem Bremsmediumreservoir stattfinden kann. Zusätzlich sind Abdichtelemente und Motoren für ein geeignetes Verstellen der Abdichtelemente in die Abdichtstellung und aus der Abdichtstellung heraus kostengünstig herstellbar.

Außerdem wird das mindestens eine Abdichtelement mittels eines an das mindestens eine Abdichtelement gekoppelten Motors in die Abdichtstellung verstellt. Das Verstellen des mindestens einen Abdichtelements erfolgt somit unabhängig von einer Betätigung des Fahrers.

Dabei wird das mindestens eine Abdichtelement mittels eines an das mindestens eine Abdichtelement gekoppelten elektrischen Motors eines elektromechanischen Bremskraftverstärkers des hydraulischen Bremssystems in die Abdichtstellung verstellt. Durch die Multifunktionalität des Bremskraftverstärkers, welche kostengünstig realisierbar ist, kann zusätzlich der Bauraum für einen somit nicht benötigten eigenen Motor zum Verstellen des mindestens einen Abdichtelements eingespart werden.

Zusätzlich wird als mindestens ein Bremsmedium-Förderelement mindestens ein Plunger derart angesteuert, dass ein der festgelegten Soll-Fördergröße entsprechendes Ist-Bremsmedium-Volumen zwischen mindestens einer Plunger-Speicherkammer als mindestens einem Speichervolumen und einem speicherexternen Volumen des mindestens einen Bremskreises verschoben wird. Die Verwendung des mindestens einen Plungers weist gegenüber einem Rückförderpumpen-basierten Fördersystem verbesserte NVH-Werte (Noise-Vibration-Harshness) auf. Insbesondere ermöglicht der mindestens eine Plunger ein "weiches" Verschieben eines Bremsmediumvolumens in oder aus dem mindestens einen Speichervolumen, ohne dass der Fahrer dies hört oder anhand eines "Vibrierens" oder "Zitterns" des Bremseingabeelements, beispielsweise des Bremspedals, spürt. Dieses "weiche" Verschieben ist insbesondere für den Fahrer weder hör- noch spürbar, ohne dass ein zwischen dem mindestens einen Plunger und dem Hauptbremszylinder benötigtes Trennventil zu schließen ist. Auf ein derartiges Trennventil kann somit verzichtet werden.

In einer vorteilhaften Weiterbildung umfasst das Verfahren die zusätzlichen Schritte: Ermitteln einer zusätzlichen Fahrerbremsvorgabe bei einer Betätigung eines Bremseingabeelements durch einen Fahrer des Fahrzeugs; Festlegen einer Soll-Unterstützungskraftgröße bezüglich einer bereitzustellenden Unterstützungskraft des Bremskraftverstärkers unter Berücksichtigung der Fahrerbremsvorgabe; sowie unter zusätzlicher Berücksichtigung der von dem fahrzeugeigenen Steuersystem bereitgestellten Vorgabe und/oder der festgelegten Soll-Fördergröße; und Ansteuern des Bremskraftverstärkers entsprechend der festgelegten Soll-Unterstützungskraftgröße. Unter der Berücksichtigung der Vorgabe und/oder der Soll-Fördergröße ist auch ein Berücksichtigen einer von der bereitgestellten Vorgabe und/oder der Soll-Fördergröße abgeleitenden Größe, bzw. eines entsprechenden Signals zu verstehen. Man kann dies auch so beschreiben, dass bei einem Einbremsen des Fahrers des Fahrzeugs in die Fremdkraftbremsung oder den Fremddruckaufbau eine Verstärkung der Fahrerbremskraft durch den Bremskraftverstärker angepasst wird. Dies gewährleistet, dass der Fahrer bei der Betätigung des Bremseingabeelements keine veränderte Funktionsweise von diesem aufgrund des bereits über die Fremdkraftbremsung aufgebauten hydraulischen Bremsdrucks in den Radbremszylindern bemerkt/spürt. Dies gewährleistet einen besseren Fahrkomfort für den Fahrer des Fahrzeugs aufgrund der Ausführung der Weiterbildung des Verfahrens.

Beispielsweise kann eine Bremskraftverstärker-Steuereinheit während oder nach einem Empfangen der Vorgabe und/oder eines Festlegens der Soll-Fördergröße aus einem ersten Betriebsmodus, in welchem die Bremskraftverstärker-Steuereinheit die von dem Bremskraftverstärker auszuübende Unterstützungskraft entsprechend einer ersten Relation unter Berücksichtigung der Fahrerbremsvorgabe festlegt, in einen zweiten Betriebsmodus geschaltet wird, in welchem die Festlegung der Unterstützungskraft unter Berücksichtigung der Fahrerbremsvorgabe entsprechend einer zweiten Relation ungleich der ersten Relation erfolgt. Dies ist eine einfach realisierbare Ausführungsform.

Die in den oberen Absätzen beschriebenen Vorteile sind auch bei einer entsprechenden Steuervorrichtung für ein hydraulisches Bremssystem eines Fahrzeugs gewährleistet.

Ebenso sind die oben genannten Vorteile auch mittels eines korrespondierenden hydraulischen Bremssystems realisierbar.

Dazu umfasst das hydraulische Bremssystem mindestens einen Plunger als Bremsmedium-Förderelement. Somit kann der Bremsdruckaufbau für eine Fremdkraftbremsung und/oder eine entsprechende aktive Funktion, wie beispielsweise einem Bremsscheibenwischer und einem Vorbefüllen der Bremse, mittels des mindestens einen Plungers durchgeführt werden. Dies ist insbesondere vorteilhaft, da ein Einfüllen oder Entnehmen eines Bremsmediums in oder aus dem Plunger keinen für den Fahrer wahrnehmbaren Lärm und kein für den Fahrer spürbares Verstellen (Vibrieren) des Bremseingabeelements bewirkt.

In einer vorteilhaften Ausführungsform umfasst der mindestens eine Plunger eine selbsthemmende Ankopplung einer Wandkomponente einer Plunger-Speicherkammer an einem Plunger-Motor. In diesem Fall ist gewährleistet, dass die selbsthemmende Ankopplung ein Füllen der Plunger-Speicherkammer, das heißt ein Zurückschieben der Ankoppelung des Plungers, zumindest bis zu einem vergleichsweise hohen Druck in dem benachbarten Bremskreis verhindert.

Als Alternative dazu kann das hydraulische Bremssystem mindestens eine eingangsseitig an dem mindestens einen zugeordneten Plunger angeordnete Ventileinheit umfassen. Über eine derartige Ventileinheit ist ein Unterbinden eines nicht gewünschten Einströmens des Bremsmediums in die Speicherkammer des Plungers und eines unvorteilhaften Ausströmens des Bremsmediums aus der Speicherkammer des Plungers einfach gewährleistbar.

Bevorzugter Weise umfasst das hydraulische Bremssystem einen Bremskraftverstärker. In diesem Fall kann das hydraulische Bremssystem zusätzlich eine Bremskraftverstärker-Steuereinheit umfassen, welche dazu ausgelegt, eine SollUnterstützungskraftgröße bezüglich einer bereitzustellenden Unterstützungskraft des Bremskraftverstärkers unter Berücksichtigung einer von einem Bremseingabeelement-Sensor bereitgestellten Fahrerbremsvorgabe, sowie unter zusätzlicher Berücksichtigung der von dem fahrzeugeigenen Steuersystem bereitgestellten Vorgabe und/oder der Soll-Fördergröße festzulegen und ein der Soll-Unterstützungskraftgröße entsprechendes drittes Steuersignal an einen Motor des Bremskraftverstärkers auszugeben. Somit ist auch bei dem hier beschriebenen hydraulischen Bremssystem gewährleistet, dass die Funktionsweise des Bremskraftverstärkers an dem mittels der Fremdkraftbremsung aufgebauten hydraulischen Druck in dem mindestens einen Radbremszylinder anpassbar ist.

### Kurze Beschreibung der Zeichnungen

Weitere Merkmale und Vorteile der vorliegenden Erfindung werden nachfolgend anhand der Figuren erläutert. Es zeigen:
- Fig. 1: ein Flussdiagramm zum Darstellen einer Ausführungsform des Verfahrens;
- Fig. 2: eine schematische Darstellung einer Ausführungsform der Steuervorrichtung;
- Fig. 3: eine schematische Darstellung einer Ausführungsform des hydraulischen Bremssystems;
- Fig. 4: eine schematische Darstellung eines ersten Ausbildungsbeispiels für einen Plungers des hydraulischen Bremssystems;
- Fig. 5: eine schematische Darstellung eines zweiten Ausführungsbeispiels für einen Plunger des hydraulischen Bremssystems;
- Fig. 6: eine schematische Darstellung eines hydraulischen Bremssystems, welches nicht von der vorliegenden Erfindung umfasst wird; und
- Fig. 7: eine schematische Darstellung eines weiteren hydraulischen Bremssystems, welches nicht von der vorliegenden Erfindung umfasst wird.

### Ausführungsformen der Erfindung

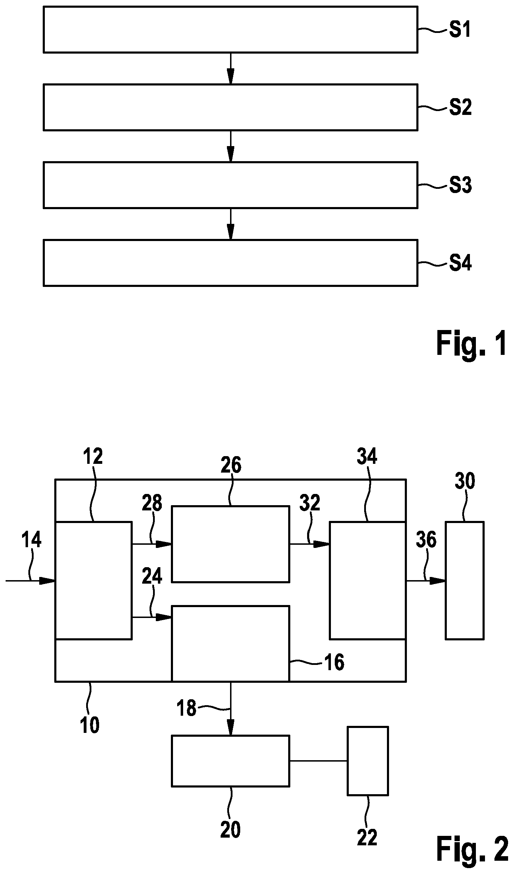

Fig. 1 zeigt ein Flussdiagramm zum Darstellen einer Ausführungsform des Verfahrens.

In einem Verfahrensschritt S1 wird eine bereitgestellte Vorgabe bezüglich einer Soll-Druckänderung in mindestens einem Radbremszylinder eines hydraulischen Bremssystems eines Fahrzeugs empfangen. Der mindestens eine Radbremszylinder ist über mindestens einen Bremskreis mit einem Hauptbremszylinder des hydraulischen Bremssystems verbunden. Unter einer Verbindung/Ankopplung des mindestens einen Radbremszylinders an den Hauptbremszylinder über den mindestens einen Bremskreis kann verstanden werden, dass ein Bremsmedium, beispielsweise eine Bremsflüssigkeit oder ein Bremsgas, zwischen dem Hauptbremszylinder und dem mindestens einen Radbremszylinder verschiebbar ist. Der Hauptbremszylinder weist in der Regel mindestens einen Verbindungskanal zu einem Bremsmediumreservoir des hydraulischen Bremssystems auf, über welchen das Bremsmedium ebenfalls verschiebbar ist.

Die empfangene Vorgabe wird von einem fahrzeugeigenen Steuersystem bereitgestellt. Das Steuersystem kann beispielsweise als automatisches Geschwindigkeits-Steuersystem, insbesondere als ACC-System (Active/Adaptive Cruise Control), ausgebildet sein. Ebenso kann das Steuersystem ein automatisches Sicherheitssystem sein, welches dazu ausgelegt ist, bei einem Erkennen einer möglichen Unfallsituation das zugehörige Fahrzeug automatisch abzubremsen. Als Alternative oder als Ergänzung dazu kann das Steuersystems auch dazu ausgelegt sein, einen Zustand mindestens einer Komponente des hydraulischen Bremssystems, wie beispielsweise einen Innendruck in einem Radbremszylinder und/oder eine Beschichtung einer Radbremszange, entsprechend einer Umgebungssituation und/oder einer Verkehrssituation zu ändern/anzupassen. Ein derartiges Steuersystem kann beispielsweise als Bremsscheibenwischer und/oder als Bremse-Vorbefüller bezeichnet werden.

Im Weiteren wird das als Reaktion auf die Vorgabe ausgeführte Verfahren deshalb auch als Fremdkraftbremsung und/oder als Fremdruckaufbau bezeichnet. Eine derartige Fremdkraftbremsung und/oder ein entsprechender Fremddruckaufbau sind mittels des hier beschriebenen Verfahrens ausführbar, ohne dass eine dazu notwendige Kraft von einem Fahrer des Fahrzeugs auf ein Bremseingabeelement auszuüben ist. Damit gewährleistet ein Ausführen dieses Verfahrens einen verbesserten Fahrkomfort für den Fahrer und ein verbessertes Zusammenwirken des Bremssystems mit dem fahrzeugeigenen Steuersystem.

Die Vorgabe kann beispielsweise ein Signal und/oder eine Größe bezüglich einer Soll-Druckänderung in dem mindestens einen Radbremszylinder, eines Soll-Drucks in dem mindestens einen Radbremszylinder, einer Soll-Geschwindigkeitsänderung des Fahrzeugs, einer Soll-Geschwindigkeit des Fahrzeugs, einer Soll-Bremsmomentänderung mindestens einer Bremszange des mindestens einen Radbremszylinders und/oder eines hydraulischen Soll-Bremsmoments der mindestens einen Bremszange des mindestens einen Radbremszylinders umfassen. Die Vorgabe ist jedoch nicht auf die hier aufgezählten Beispiele beschränkt.

In einem Verfahrensschritt S2 wird mindestens ein Abdichtelement in eine Abdichtstellung in Bezug zu dem mindestens einen Verbindungskanal verstellt. Unter einem Verstellen des mindestens einen Abdichtelements in die Abdichtstellung des mindestens einen Verbindungskanals kann beispielsweise verstanden werden, dass mindestens eine Durchströmöffnung des mindestens einen Verbindungskanals, durch welche ein Bremsmedium-Austausch zwischen dem Hauptbremszylinder und dem Bremsmediumreservoir stattfinden kann, so durch das mindestens eine Abdichtelement abgedeckt wird, dass das in einem Zeitintervall durchströmbare Bremsmediumvolumen signifikant reduziert wird. Insbesondere kann die mindestens eine Durchströmöffnung durch das mindestens eine Abdichtelement vollständig abgedeckt werden, so dass ein Durchströmen eines Bremsmedium-Volumens verlässlich unterbunden ist.

Vorzugsweise ist das mindestens eine verstellte Abdichtelement in dem Hauptbremszylinder angeordnet. Das mindestens eine Abdichtelement kann beispielsweise derart in die Abdichtstellung verstellt werden, dass die mindestens eine Schnüffelbohrung des Hauptbremszylinders abgedeckt wird. Geeignete Abdichtelemente zum Abdecken der mindestens einen Schnüffelbohrung des Hauptbremszylinders sind einfach und kostengünstig ausführbar. Zusätzlich ist ein Verstellen des mindestens einen Abdichtelements in eine Abdichtstellung der mindestens einen Schnüffelbohrung mit einer vergleichsweise geringen Kraft realisierbar. Ebenso kann das mindestens eine Abdichtelement zu einem späteren Zeitpunkt mit einer relativ kleinen Kraft wieder aus der Abdichtstellung der mindestens einen Schnüffelbohrung in eine Ausgangsstellung zurückverstellt werden.

Bevorzugter Weise wird das mindestens eine Abdichtelement mittels eines an das mindestens eine Abdichtelement gekoppelten Motors in die Abdichtstellung verstellt. Somit ist der Verfahrensschritt S2 ausführbar, ohne dass der Fahrer des Fahrzeugs mit dem hydraulischen Bremssystem dazu eine Betätigung ausführen muss. Insbesondere kann der Motor eines Bremskraftverstärkers des hydraulischen Bremssystems zum Ausführen des Verfahrensschritts S2 herangezogen werden. Durch diese Multifunktionalität des Motors des Bremskraftverstärkers wird die Ausstattung eines hydraulischen Bremssystems mit einem zusätzlichen Motor zum Ausführen des Verfahrensschritt S2 nicht notwendig.

In einem weiteren Verfahrensschritt S3 wird eine Soll-Fördergröße für mindestens ein Bremsmedium-Förderelement des hydraulischen Bremssystems unter Berücksichtigung der empfangenen Vorgabe festgelegt. Das mindestens eine Bremsmedium-Förderelement, für welches die Soll-Fördergröße festgelegt wird, ist zum Fördern eines Bremsmediumvolumens zwischen dem mindestens einem Speichervolumen des hydraulischen Bremssystems und einem speicherexternen Volumen des mindestens einen zugeordneten Bremskreises ausgelegt.

Unter der festgelegten Soll-Fördergröße kann insbesondere eine Soll-Funktion des mindestens einen Bremsmedium-Förderelements, oder eine die Soll-Funktion beschreibende/festlegende Größe, verstanden werden. Eine derartige Soll-Fördergröße kann beispielsweise eine Soll-Pumpzahl einer Pumpe, eine Soll-Verstellgröße einer verstellbaren Komponente des mindestens einen Speichervolumens und/oder ein zu verschiebendes Soll-Bremsmediumvolumen, bzw. eine entsprechende Größe, umfassen.

Das mindestens eine Bremsmedium-Förderelement kann beispielsweise einen Plunger und/oder mindestens eine Pumpe, wie insbesondere eine Rückstellpumpe, umfassen. Bevorzugter Weise ist die mindestens eine Pumpe in dem hydraulischen Bremssystem so angeordnet, dass ein Bremsmediumvolumen in das mindestens eine Speichervolumen und/oder oder aus dem mindestens einen Speichervolumen pumpbar ist. Das Speichervolumen kann beispielsweise ein Druckspeicher und/oder eine Kammer eines Zwei-Kammern-Zylinders sein.

Des Weiteren wird in einem Verfahrensschritt S4 das mindestens eine Bremsmedium-Förderelement entsprechend der festgelegten Soll-Fördergröße angesteuert. Vorzugsweise erfolgt das Ansteuern so, dass ein der festgelegten Soll-Fördergröße entsprechendes Ist-Bremsmediumvolumen zwischen dem mindestens einen Speichervolumen und einem speicherexternen Volumen des mindestens einen Bremskreises verschoben wird. Unter dem speicherexternen Volumen kann insbesondere ein Restvolumen des mindestens einen Bremskreises, welches außerhalb des mindestens einen Bremskreises liegt, verstanden werden.

In einer vorteilhaften Ausführungsform des Verfahrens kann beispielsweise als das mindestens eine Bremsmedium-Förderelement mindestens ein Plunger derart angesteuert werden, dass ein der festgelegten Soll-Fördergröße entsprechendes Ist-Bremsmediumvolumen zwischen mindestens einer Plunger-Speicherkammer als mindestens einem Speichervolumen und dem speicherexternen Volumen des mindestens einen Bremskreises verschoben wird.

Die Nummerierung der oben beschriebenen Verfahrensschritte S1 bis S4 gibt keine einzuhaltende zeitliche Reihenfolge der Verfahrensschritte S1 bis S4 zum Ausführen des Verfahrens vor. Insbesondere kann der Verfahrensschritt S2 vor oder nach dem Verfahrensschritt S4 ausgeführt werden.

Das in den oberen Absätzen beschriebene Verfahren ist derart weiterbildbar, dass auch auf eine Betätigung eines Bremseingabeelements durch einen Fahrer des Fahrzeugs beim Ausführen des Verfahrens reagiert werden kann. Insbesondere kann in diesem Fall nach einem Ermitteln der zusätzlichen Fahrerbremsvorgabe, vorgegeben durch eine Betätigung des Bremseingabeelements durch den Fahrer, eine Soll-Unterstützungskraftgröße bezüglich einer bereitzustellenden Unterstützungskraft des Bremskraftverstärkers unter zusätzlicher Berücksichtigung der empfangenen Vorgabe und/oder der Soll-Fördergröße festgelegt werden. Unter einem Berücksichtigen der empfangenen Vorgabe und/oder der Soll-Fördergröße kann auch ein Berücksichtigen einer von der empfangenen Vorgabe und/oder der Soll-Fördergröße abgeleiteten Größe und/oder eines unter Berücksichtigung der empfangenen Vorgabe und/oder der Soll-Fördergröße bereitgestellten Signals verstanden werden.

Unter der festgelegten Soll-Unterstützungskraftgröße kann eine die festgelegte Soll-Funktion des Bremskraftverstärkers beschreibende Größe verstanden werden. Beispielsweise kann die Soll-Unterstützungskraftgröße eine Soll-Unterstützungskraft, eine Soll-Unterstützungskraftänderung und/oder eine Soll-Drehzahl eines Bremskraftverstärker-Motors umfassen.

Anschließend kann der Bremskraftverstärker entsprechend der festgelegten Soll-Unterstützungskraftgröße angesteuert werden. Dieses Anpassen der Funktionsweise des Bremskraftverstärkers an die mittels der Verfahrensschritte S1 bis S4 ausgeführte Fremdkraftbremsung, bzw. an den entsprechenden Fremddruckaufbau, gewährleistet einen zusätzlichen Bedienkomfort des Bremseingabeelements für den Fahrer, da eine Reaktion des Bremseingabeelements auf die Betätigung des Bremseingabeelements in diesem Fall nicht durch die Fremdkraftbremsung und/oder den Fremddruckaufbau beeinträchtigt wird.

Fig. 2 zeigt eine schematische Darstellung einer Ausführungsform der Steuervorrichtung.

Die in Fig. 2 schematisch dargestellte Steuervorrichtung 10 für ein hydraulisches Bremssystems eines Fahrzeugs kann nahe an dem hydraulischen Bremssystem verbaut werden. Als Alternative dazu kann die Steuervorrichtung 10 auch beabstandet von dem hydraulischen Bremssystem die nachfolgende Funktion ausführen. Beispielsweise kann die Steuervorrichtung 10 auch eine Untereinheit einer zentralen Fahrzeugsteuervorrichtung sein.

Als Alternative zu der in Fig. 2 dargestellten kompakt ausgebildeten Steuervorrichtung 10 ist auch eine Ausbildung von untereinander räumlich getrennt anordbaren Untereinheiten realisierbar. In diesem Fall ist unter der Steuervorrichtung 10 eine Elektronik des hydraulischen Bremssystems aus mehreren Untereinheiten zu verstehen. Ebenso kann die Steuervorrichtung 10 als kompakt oder vereinzelt ausgebildete Elektronik des hydraulischen Bremssystems noch weitere Funktionen einer herkömmlichen Bremssystem-Elektronik ausführen.

Die Steuervorrichtung 10 umfasst eine Eingabeeinrichtung 12, welche dazu ausgelegt ist, ein Vorgabesignal 14 mit einer bereitgestellten Vorgabe bezüglich einer Soll-Druckänderung in mindestens einem (nicht skizzierten) Radbremszylinder des hydraulischen Bremssystems zu empfangen. Das Vorgabesignal 14 mit der Vorgabe ist von einem fahrzeugeigenen Steuersystem, für welches Beispiele oben bereits beschrieben sind, bereitstellbar. Bezüglich einer Darstellung des mindestens einen Bremskreises, über welchen der mindestens eine Radbremszylinder mit einem Hauptbremszylinder verbunden ist, wird auf die nachfolgende Figur verwiesen.

Die Steuervorrichtung 10 umfasst auch eine erste Ansteuereinrichtung 16, welche mittels der Eingabeeinrichtung 12 derart ansteuerbar ist, dass die erste Ansteuereinrichtung 16 nach einem Empfangen des Vorgabesignals 14 mit der Vorgabe durch die Eingabeeinrichtung 12 ein erstes Steuersignal 18 an einen Motor 20 ausgibt. Der Motor 20 ist an mindestens ein Abdichtelement 22 mechanisch ankoppelbar. Der Kopplungskontakt zwischen dem Motor 20 und dem mindestens einen Abdichtelement 22 ist so ausgebildet, dass der Motor 20 in eine Stellung verfahrbar ist, in welcher ein mechanischer Kontakt zwischen dem Motor 20 und dem mindestens einen Abdichtelement 22 vorliegt. In einer bevorzugten Ausbildung ist das Abdichtelement 22 bereits in einer Ausgangsstellung benachbart zu mindestens einem (nicht skizzierten) Verbindungskanal des Hauptbremszylinders zu einem Bremsmediumreservoir des hydraulischen Bremssystems angeordnet. Der Motor 20 ist mittels des ersten Steuersignals 18 so ansteuerbar, dass das mindestens eine Abdichtelement in eine Abdichtstellung in Bezug zu dem mindestens einen Verbindungskanal verstellbar ist. Hinsichtlich einer Beschreibung einer geeigneten Abdichtstellung des mindestens einen Abdichtelements 22, welche beispielsweise ein Abdecken mindestens einer Schnüffelbohrung bewirken kann, wird auf die oberen Ausführungen verwiesen.

Unter einem Steuern der ersten Ansteuereinrichtung 16 durch die Eingabeeinrichtung 12 kann beispielsweise verstanden werden, dass die Eingabeeinrichtung 12 nach einem Empfangen des Vorgabesignals 14 ein Aktivierungssignal 24 an die erste Ansteuereinrichtung 16 ausgibt. Mittels eines derart ausgegebenen Aktivierungssignals 24 kann die erste Ansteuereinrichtung 16 zum Ausgeben des ersten Steuersignals 18 ansteuerbar sein. Als Alternative dazu kann die Eingabeeinrichtung 12 nach dem Empfangen des Vorgabesignals 14 auch ein (nicht skizziertes) Signal an eine andere Komponente der Steuervorrichtung 10, beispielsweise an die nachfolgend beschriebene Auswerteeinrichtung 26, ausgeben. In diesem Fall ist die andere Komponente durch das Signal derart ansteuerbar, dass das Aktivierungssignal 24 von der anderen Komponente an die erste Ansteuereinrichtung 16 ausgegeben wird.

Zusätzlich ist die Eingabeeinrichtung 12 dazu ausgelegt, ein Empfangssignal 28 mit oder entsprechend der empfangenen Vorgabe an die Auswerteeinrichtung 26 auszugeben. Das Empfangssignal 28 kann beispielsweise gleich dem Vorgabesignal 14 sein. Die Auswerteeinrichtung 26 ist dazu ausgelegt, unter Berücksichtigung der über das Empfangssignal 28 empfangenen Vorgabe eine Soll-Fördergröße für mindestens ein Bremsmedium-Förderelement 30 des hydraulischen Bremssystems festzulegen. Das mindestens eine Bremsmedium-Förderelement 30, für welches die Soll-Fördergröße festlegbar ist, ist zum Fördern eines Bremsmediumvolumens zwischen mindestens einem (nicht dargestellten) Speichervolumen und einem speicherexternen Volumen des mindestens einen Bremskreises ausgelegt. Auf bevorzugte Ausführungsformen des Bremsmedium-Förderelements 30 wird anhand der nachfolgenden Figur genauer eingegangen.

Nach einem Festlegen der Soll-Fördergröße gibt die Auswerteeinrichtung 26 ein entsprechendes Auswertesignal 32 an eine zweite Ansteuereinrichtung 34 aus. Die zweite Ansteuereinrichtung ist dazu ausgelegt, ein zweites Steuersignal 36 entsprechend der festgelegten Soll-Fördergröße an das mindestens eine Bremsmedium-Förderelement 30 auszugeben. Auf die Vorteile eines derartigen Ansteuerns des mindestens einen Bremsmedium-Förderelements 30 mittels der Steuervorrichtung 10, wobei gleichzeitig der ebenfalls angesteuerte Motor 20 die beschriebene Verstellbewegung des mindestens einen Abdichtelements 22 ausführt, wird unten genauer eingegangen.

Die in den oberen Absätzen beschriebene Steuervorrichtung 10 ist mit einem geringen Herstellungsaufwand und kostengünstig als Einzelkomponente oder als kompakte oder mehrteilige Untereinheit einer Bremssystem-Steuerelektronik realisierbar. Insbesondere erfordert die Steuervorrichtung 10 für eine verlässliche Funktionsweise keine aufwändige, und damit teure und/oder viel Bauraum beanspruchende Elektronik.

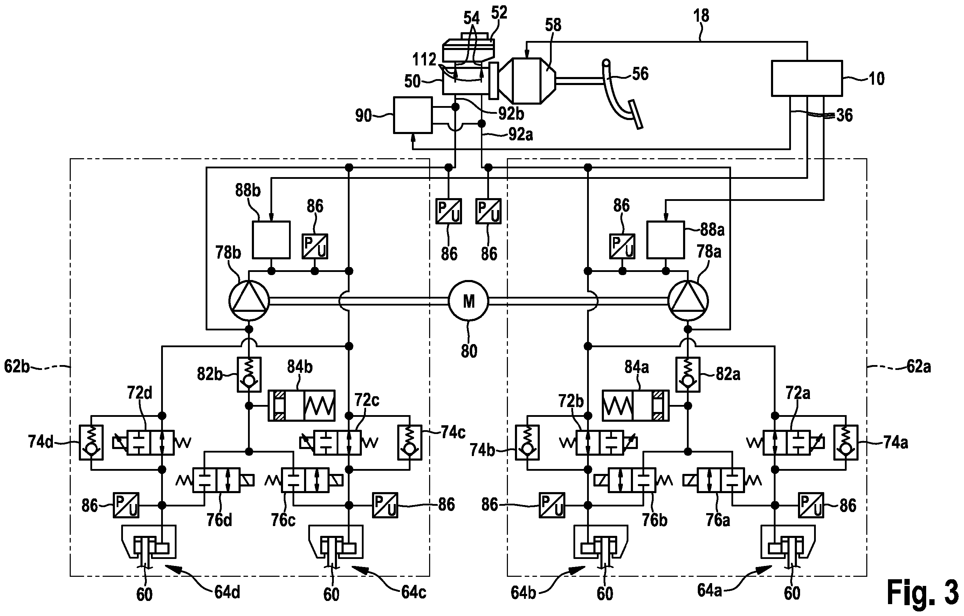

Fig. 3 zeigt eine schematische Darstellung einer Ausführungsform des hydraulischen Bremssystems.

Das in Fig. 3 schematisch dargestellte hydraulische Bremssystem für ein Fahrzeug umfasst einen Hauptbremszylinder 50, mit welchem ein Bremsmediumreservoir 52 über mindestens einen Verbindungskanal 54 verbunden ist. Ein beispielsweise als Bremspedal ausgebildetes Bremseingabeelement 56 ist derart an den Hauptbremszylinder 50 gekoppelt, dass ein Fahrer des Fahrzeugs mit dem hydraulischen Bremssystem über ein Betätigen des Bremseingabeelements 56 eine Druckänderung in dem Hauptbremszylinder 50 bewirken kann. Zur Unterstützung des Fahrers ist ein Bremskraftverstärker 58 derart an den Hauptbremszylinder 50 gekoppelt, dass bei einer Betätigung des Bremseingabeelements 56 durch den Fahrer eine Gesamtkraft aus zumindest der auf das Bremseingabeelement 56 ausgeübten Fahrerbremskraft und einer von dem Bremskraftverstärker 58 bereitgestellten Unterstützungskraft eine Druckänderung in dem Hauptbremszylinder 50 bewirken kann. Somit ist die zum Abbremsen mindestens eines Rads 60 des Fahrzeugs von dem Fahrer aufzubringende Fahrerbremskraft reduzierbar.

An den Hauptbremszylinder 50 ist mindestens ein Bremskreis 62a und 62b so angebunden, dass ein Bremsmedium zwischen dem Hauptbremszylinder 50 und dem mindestens einen Bremskreis 62a oder 62b strömen kann. Ein derartiger Bremskreis umfasst mindestens einen Radbremszylinder 64a bis 64d. Der dargestellte Bremskreis weist zwei Bremskreise 62a und 62b mit jeweils zwei Radbremszylindern 64a bis 64d auf. Es wird jedoch darauf hingewiesen, dass die Realisierbarkeit des hier wiedergegebenen hydraulischen Bremssystems nicht auf eine bestimmte Anzahl von Bremskreisen 62a und 62b mit einer fest vorgegebenen Anzahl von Radbremszylindern 64a bis 64d begrenzt ist. Ebenso ist die achsweise, radindividuelle oder diagonale Zuordnung der Bremskreise 62a und 62b des Bremssystems an die mindestens vier Räder 60 des Fahrzeugs beliebig. In einer weiteren Ausführungsform kann das hydraulische Bremssystem auch drei Bremskreise für eine X-Bremskreisaufteilung haben.

Bei dem in Fig. 3 dargestellten Bremssystem sind die beiden Bremskreise 62a und 62b identisch ausgeführt. Das Bremssystem ist jedoch nicht auf die identische Ausbildung seiner Bremskreise 62a und 62b beschränkt. Die Ausstattung der dargestellten Bremskreise 62a und 62b mit jeweils einem Radeinlassventil 72a bis 72d mit einem parallel dazu angeordneten Rückschlagventil 74a bis 74d und einem Radauslassventil 76a bis 76d pro Radbremszylinder 64a bis 64d, sowie einer Pumpe 78a oder 78b, wobei beide Pumpen 78a und 78b auf einer gemeinsamen Welle eines Motors 80 liegen, ist hier nur beispielhaft dargestellt. Das hier wiedergegebene Bremssystem ist nicht auf eine Ausstattung seiner Bremskreise 62a oder 62b mit den Komponenten 72a bis 78b, bzw. auf ihre hier dargestellte Ankopplung aneinander, beschränkt. Auch die Ausstattung eines jeden Bremskreises 62a und 62b mit je einem weiteren Rückschlagventil 82a oder 82b und einer Speicherkammer 84a oder 84b, welche zwischen der Ansaugseite einer Pumpe 78a oder 78b und den zugehörigen Radauslassventilen 76a bis 76d angeordnet sind, ist lediglich optional zu interpretieren. Ebenso sind die dargestellten Drucksensoren 86 in ihrer Gesamtanzahl pro Bremskreis 62a oder 62b und ihrer Anordnung darin optional zu interpretieren, da sie nicht vorhanden sein müssen.

Jeder der dargestellten Bremskreise 62a und 62b weist einen eigenen Plunger 88a oder 88b auf, welcher benachbart zu der Förderseite der zugeordneten Pumpe 78a oder 78b angeordnet ist. Ein weiterer Plunger 90 weist je eine Durchströmöffnung zu den zwei an den Hauptbremszylinder 50 angekoppelten Zuführleitungen 92a und 92b der beiden Bremskreise 62a und 62b auf. Jeder der Plunger 88a, 88b und 90 kann als Bremsmedium-Förderelement mit einem eigenen eingebauten Speichervolumen des Bremssystems angesehen werden, mittels welchem ein Bremsmediumvolumen zwischen dem mindestens einen Speichervolumen des Plungers 88a, 88b oder 90 und dem speicherexternen Volumen des mindestens einen zugeordneten Bremskreises 62a und 62b verschiebbar ist.

Es wird darauf hingewiesen, dass die Ausstattung des hier wiedergegebenen Bremssystems nicht auf eine bestimmte Anzahl der Plunger 88a, 88b und 90 oder deren Anordnung an oder in dem mindestens einen Bremskreis 62a oder 62b beschränkt ist.

Nachfolgend werden zwei Ausführungsbeispiele für die Plunger 88a, 88b und 90 beschrieben:

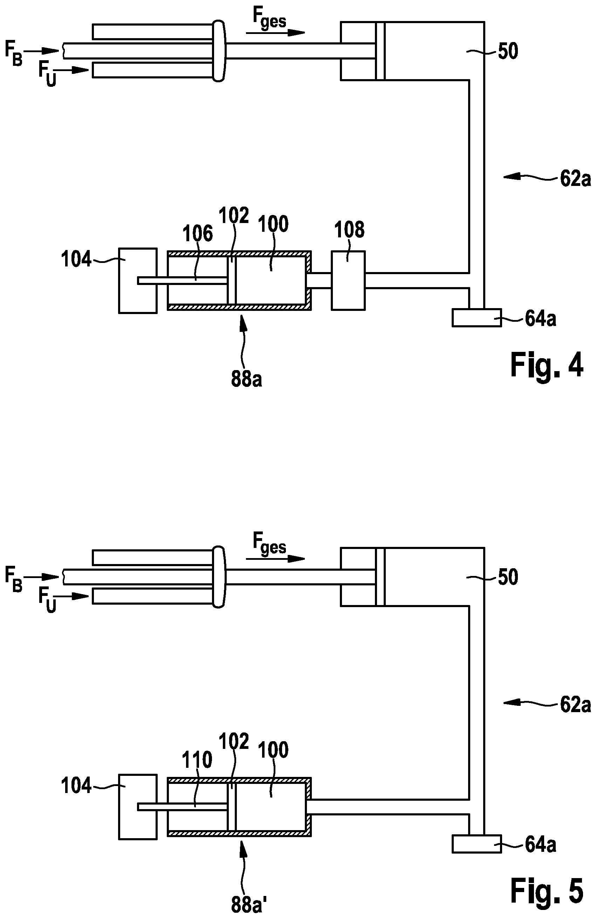

Fig. 4 zeigt eine schematische Darstellung eines ersten Ausbildungsbeispiels für einen Plunger des hydraulischen Bremssystems.

Der in Fig. 4 schematisch wiedergegebene Plunger 88a weist eine Plunger-Speicherkammer 100 und einen an eine verstellbare Wandkomponente 102 der Plunger-Speicherkammer 100 mittels einer Ankopplung 106 verbundenen Plunger-Motor 104 auf. Durch die Ankopplung 106 zwischen dem Plunger-Motor 104 und der verstellbaren Wandkomponente 102 ist das Volumen der Plunger-Speicherkammer 100, bzw. die in die Plunger-Speicherkammer 100 eingefüllte Bremsmediummenge, steuerbar.

Zur zusätzlichen Steuerung eines Bremsmediumstroms zwischen der Plunger-Speicherkammer 100 und einem (schematisch, nur teilweise wiedergegebenen) speicherexternen Volumen des Bremskreises 62a ist eine Ventileinheit 108 eingangsseitig an dem Plunger 88a angeordnet. Die Ventileinheit 108 kann beispielsweise als Rückschlagventil, Schaltventil oder als Regelventil ausgebildet sein. Der Plunger 88a und die Ventileinheit 108 können auch einstückig ausgebildet sein. Auf die Ansteuerung des Plungers 88a und der Ventileinheit 108 wird unten genauer eingegangen.

Somit ist ein hydraulischer Druck in dem mindestens einen dem Plunger zugeordneten Radbremszylinder 64a, wobei auf eine Darstellung eines weiteren Radbremszylinders verzichtet wurde, nicht nur über eine Gesamtkraft F_{ges}, welche sich zumindest aus einer Fahrerbremskraft F_{B} und/oder einer Unterstützungskraft F_{U} des Bremskraftverstärkers ergibt, sondern auch über eine Betätigung des Plunger-Motors 104 und der Ventileinheit 108 steuerbar. Somit besteht die Möglichkeit, unabhängig von einer von dem Fahrer aufgebrachten Fahrerbremskraft F_{B} und/oder einer von dem Bremskraftverstärker bereitgestellten Unterstützungskraft F_{U} den hydraulischen Druck in dem Radbremszylinder 64a und damit das auf das zugehörige Rad ausgeübte hydraulische Bremsmoment, zu ändern. Auf die sich daraus ergebenden Vorteile wird unten genauer eingegangen.

Fig. 5 zeigt eine schematische Darstellung eines zweiten Ausführungsbeispiels für einen Plunger des hydraulischen Bremssystems.

Der Plunger 88a' ist aufgrund einer selbsthemmenden Ankopplung 110 des Plunger-Motors 104 an die verstellbare Wandkomponente 102 der Plunger-Speicherkammer 100 so ausgebildet, dass ein unerwünschtes Füllen der Plunger-Speicherkammer 100 aus dem Bremssystem, bzw. ein ungewolltes Zurückschieben des Plungers 88'a zumindest bis zu einem relevanten Druck verhindert ist. Man kann dies auch so bezeichnen, dass der Plunger 88'a selbsthemmend ausgebildet ist. Ein derartiger Plunger 88'a gewährleistet ebenfalls die im Weiteren aufgeführten Vorteile.

Anstelle oder zusätzlich zu den oberen Beispielen sind auch andere Ausführungsbeispiele für einen Plunger, beispielsweise mit zusätzlichem Getriebe, verwendbar.

Das in Fig. 3 dargestellte hydraulische Bremssystem weist auch mindestens ein (nicht skizziertes) Abdichtelement auf, welches mittels eines Motors, an welchen es ankoppelbar ist, in eine Abdichtstellung in Bezug zu dem mindestens einen Verbindungskanal 54 verstellbar ist. Bei dem dargestellten Bremssystem ist der Motor, mittels welchem das mindestens eine Abdichtelement verstellbar ist, ein Motor des Bremskraftverstärkers 58. Der Bremskraftverstärker 58 ist als elektromechanischer Bremskraftverstärker (i-Booster) ausgebildet.

Die vorteilhafte Multifunktionalität des Bremskraftverstärkers 58 mit einer zusätzlichen Verstellbarkeit des mindestens einen Abdichtelements mittels des Bremskraftverstärkers 58 ist jedoch nicht auf die hier aufgezählten Typen beschränkt. Bevorzugter Weise ist der Bremskraftverstärker 58 als steuerbarer/regelbarer Bremskraftverstärker ausgebildet, was noch weitere Nutzungen des Bremskraftverstärkers 58 erlaubt.

Das hydraulische Bremssystem weist auch die oben schon beschriebene Steuervorrichtung 10 auf. Mittels des ersten Steuersignals 18 ist der Bremskraftverstärker 58 beispielsweise so ansteuerbar, dass das mindestens eine Abdichtelement so verstellt wird, dass die Schnüffelbohrungen 112 abgedeckt werden. Über das zweite Steuersignal 36 werden die Plunger 88a, 88b und 90 so angesteuert, dass ein hydraulischer Druck entsprechend eines gewünschten hydraulischen Bremsmoments einer Fremdkraftbremsung und/oder eine bevorzugte Druckerhöhung einer Fremddruckerhöhung in den Radbremszylindern 64a bis 64d ausgeführt wird. Das Ansteuern der Plunger 88a, 88b und 90 über das zweite Steuersignal 36 kann unter Berücksichtigung der Druck-Volumen-Kennlinie des hydraulischen Drucks in jedem der Radbremszylinder 64a bis 64g radindividuell erfolgen.

Somit ist es bei dem hier beschriebenen Bremssystem möglich, bei einer Fremdkraftbremsung oder einem Fremddruckaufbau (aktiven Druckaufbau), wie es beispielsweise für eine ACC-Regelung, einen Bremsscheibenwischer und/oder ein Vorbefüllen der Bremsen vorteilhaft ist, auf das Bereitstellen der für die Fremdkraftbremsung oder den Fremddruckaufbau benötigten Kraft mittels eines steuerbaren/regelbaren Bremskraftverstärkers zu verzichten. Auch für ein ESP-System oder ein EHB-System kann die Steuervorrichtung 10 mit den Plungern 88a, 88b und 90 verwendet werden.

Ein herkömmliches Fremdkraftbremsen oder ein Fremddruckaufbau nach dem Stand der Technik mit einer vollständigen Bereitstellung der dazu benötigten Kraft mittels des Bremskraftverstärkers ist mit dem Nachteil verbunden, dass der Betriebspunkt/Arbeitspunkt des Bremskraftverstärkers während des Fremdkraftbremsens oder Fremddruckaufbaus verändert wird. Dabei verändert sich in der Regel auch die Stellung des Bremseingabeelements 56, was beispielsweise als ein Mitziehen des Bremspedals bezeichenbar ist. Dies wird bei einem Einbremsen des Fahrers während des Fremdkraftbremsens oder des Fremddruckaufbaus häufig als irritierend empfunden, da sich die Eigenschaften des Bremspedals entsprechend verändert haben. Der Fahrer spürt beispielsweise bei einer Berührung des Bremspedals in diesem Fall eine unerwartete Bremspedalstellung. Betätigt der Fahrer das Bremspedal weiterhin, so spürt der Fahrer aufgrund des sich bereits aufgebauten Drucks im System beim Betätigen des Pedals ein völlig anderes Pedalgefühl als beim Betätigen des Pedals aus einer Ruhe/Nullstellung heraus. Beispielsweise sind die Anfangskraft, die Verzögerung und/oder das Verhältnis zwischen einer Kraftänderung und einer entsprechenden Wegänderung verändert. Da bei der hier beschriebenen Erfindung die Fremdkraftbremsung oder der Fremddruckaufbau jedoch nicht mit einem für den Fahrer erkennbaren Verstellen des Bremseingabeelements 56 ausführbar ist, wird dieser herkömmliche Nachteil behoben.

Somit kann bei dem hier dargestellten Bremssystem ein Druckaufbau in mindestens einem Radbremszylinder 64a bis 64d über den mindestens einen Plunger 88a, 88b und 90 mit minimaler Änderung des Arbeitspunktes des Bremskraftverstärkers 58 erreicht werden. Vorzugsweise wird der Bremskraftverstärker 58 dazu nur so aktiviert, dass die Schnüffelbohrungen 112, das heißt die (hydraulische) Verbindung von dem Hauptbremszylinder 50 zu dem Bremsmediumreservoir 52, geschlossen werden. Ein verlässliches Abdecken der Verbindung von dem Hauptbremszylinder 50 zu dem Bremsmediumreservoir 52 erfordert nur ein Verstellen des mindestens einen Abdichtelements um einen vergleichsweise kleinen Verstellweg mittels des Bremskraftverstärkers 58. Danach ist ein konstantes Volumen des Bremsmediums in dem Bremssystem eingeschlossen, das heißt zwischen dem Hauptbremszylinder 50 und dem Bremsmediumreservoir 52 findet bei abgedeckten Schnüffelbohrungen 112 kein Bremsmediumaustausch statt. Entsprechend ist auch ein Druckabbau auf einfache Weise realisierbar.

Fördert man nun ein bestimmtes Bremsmediumvolumen von dem mindestens einen Plunger 88a, 88b oder 90 in das Bremssystem, so ergibt sich ein Druckaufbau in mindestens einem Radbremszylinder 64a bis 64d. Während des Druckaufbaus wird der Bremskraftverstärker 58 so angesteuert/eingeregelt, dass die Schnüffelbohrungen 112 geschlossen bleiben. Dies kann auf einfache Weise durch eine Positionsregelung des Bremskraftverstärkers 58 erfolgen. Eine solche Regelstrategie ist besonders vorteilhaft, da in der Regel nur geringe Hardwaretoleranzen zu beachten sind, das heißt es gibt eine von dem Bremskraftverstärker 58 anfahrbare Position, bei der garantiert ist, dass die Schnüffelbohrungen 112 geschlossen sind/bleiben, und welche nicht signifikant toleranzbehaftet ist.

Bei der Ansteuerung des mindestens einen Plungers 88a, 88b oder 90 mittels des zweiten Steuersignals 36 kann auch ein von mindestens einem Drucksensor 86 bereitgestellter Vordruck, Kreisdruck und/oder Raddruck von der Steuervorrichtung 10 berücksichtigt werden. Dies ist vorteilhaft für eine hohe Genauigkeit eines eingestellten Bremsdrucks. Als Alternative oder als Ergänzung dazu kann eine Druckinformation auch anhand der Ansteuer- und/oder Messgrößen des mindestens einen Plungers 88a, 88b und 90, wie beispielsweise einem Ansteuerstrom und/oder eine Motorposition berechnet werden. Auch auf diese Weise ist eine entsprechende, vorteilhafte Regelung des hydraulischen Drucks in mindestens einem Radbremszylinder 64a bis 64d ausführbar.

Der mindestens eine Plunger 88a, 88b und 90 kann somit auch weggeregelt oder weggesteuert betrieben werden, beispielsweise durch Auswertung seiner Motorposition. Ein derartiges Wegregelungs- oder Wegsteuerungsverfahren ist vorteilhaft, weil es keine Zusatzsensorik, wie beispielsweise einen an dem Plunger angeordneten Drucksensor, benötigt. Bevorzugter Weise erfolgt eine derartige Wegregelung/Wegsteuerung unter zusätzlicher Berücksichtigung der Druck-Volumen-Eigenschaften des mindestens einen Radbremszylinders 64a bis 64d. Vorteilhaft ist eine Speicherung der Druck-Volumen-Kennlinie in einem entsprechenden Steuergerät, beispielsweise in der Steuervorrichtung 10. Da die Druck-Volumen-Kennlinie starke Schwankungen, insbesondere über ihre Lebensdauer, aufweisen kann, ist es vorteilhaft, das Regelungsverfahren mit einer nach einer bestimmten Zeitspanne ausgeführten Aktualisierung der Druck-Volumen-Kennlinie zu kombinieren.

Bei dem hier beschriebenen Bremssystem können die hydraulischen Drücke in den Radbremszylindern 64a bis 64d auch radindividuell eingestellt werden, wie dies beispielsweise im ESP-System vorteilhaft ist. Zusätzlich kann der Fahrer auch während des Fremddruckaufbaus bzw. der Fremdkraftbremsung in das Bremssystem hineinbremsen. Des Weiteren ist die vorliegende Erfindung mit dem Vorteil verbunden, dass keine Trennventile, wie beispielsweise ein Umschaltventil oder ein Hauptschaltventil, zum Einsperren von Druck in einem Bremssystem mehr benötigt werden.

In einer Weiterbildung kann das Bremssystem auch eine (nicht skizzierte) Bremskraftverstärker-Steuereinheit umfassen, welche dazu ausgelegt ist, eine Soll-Unterstützungskraftgröße bezüglich einer bereitzustellenden Unterstützungskraft des Bremskraftverstärkers 58 unter Berücksichtigung einer von einem Bremseingabeelement-Sensor bereitgestellten Fahrerbremsvorgabe festzulegen. Bevorzugter Weise erfolgt die Festlegung der Soll-Unterstützungskraftgröße unter zusätzlicher Berücksichtigung der von dem fahrzeugeigenen Steuersystem bereitgestellten Vorgabe und/oder der festgelegten Soll-Fördergröße. Anschließend kann ein der festgelegten Soll-Unterstützungskraftgröße entsprechendes drittes Steuersignal an einen Motor des Bremskraftverstärkers 58 ausgegeben werden, so dass der Bremskraftverstärker zum Bereitstellen einer der Soll-Unterstützungskraftgröße entsprechenden Unterstützungskraft angesteuert wird. Eine derartige Ausbildung der Bremskraftverstärker-Steuereinheit ist einfach und kostengünstig realisierbar.

Beispielsweise können die Steuervorrichtung und die Bremskraftverstärker-Steuereinheit derart ausgebildet sein, dass die Bremskraftverstärker-Steuereinheit mittels der Steuervorrichtung beim Ausführen einer Fremdkraftbremsung aus einem ersten Betriebsmodus, in welchem die von dem Bremskraftverstärker auszuübende Unterstützungskraft entsprechend einer ersten Relation unter Berücksichtigung der Fahrerbremsvorgabe festlegbar ist, , in einen zweiten Betriebsmodus schaltbar ist, in welchem die Festlegung der Unterstützungskraft unter Berücksichtigung der Fahrerbremsvorgabe entsprechend einer zweiten Relation ungleich der ersten Relation ausführbar ist. Dies ist eine einfach realisierbare Ausführungsform.

Die Bremskraftverstärker-Steuereinheit kann insbesondere eine Untereinheit der Steuervorrichtung 10 sein. Die Bremskraftverstärker-Steuereinheit kann auch einstückig mit dem Bremskraftverstärker 58 ausgebildet sein.

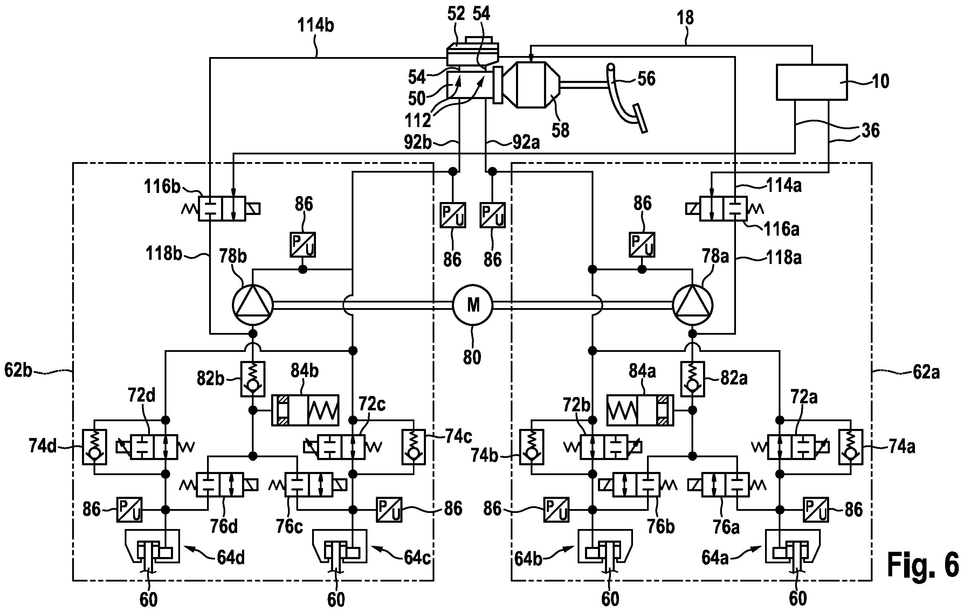

Fig. 6 zeigt eine schematische Darstellung eines hydraulischen Bremssystems, welches nicht von der vorliegenden Erfindung umfasst wird.

Das in Fig. 6 dargestellte Bremssystem weist die schon beschriebene Steuervorrichtung 10 und die Bremssystem-Komponenten 50 bis 86 auf. Zusätzlich umfasst das Bremssystem für jeden Bremskreis 62a und 62b jeweils ein über eine Saugleitung 114a oder 114b an das Bremsmediumreservoir 52 gekoppeltes Trennventil 116a und 116b. Jedes der Trennventile 116a und 116b ist über eine eigene Leitung 118a oder 118b an die Ansaugseite der dem Bremskreis 62a oder 62b zugeordnete Pumpe 78a oder 78b gekoppelt. Über ein Ansteuern der Trennventile 116a und 116b mittels des zweiten Steuersignals 36 können somit auch bei dem Bremssystem der Fig. 6 die oben schon genannten Vorteile gewährleistet werden. Insbesondere kann bei diesem Bremssystem auch nach einem Abdecken der Schnüffelbohrungen 112 noch ein Bremsmediumvolumen zwischen dem Bremsmediumreservoir 52 und mindestens einem Bremskreis 62a und 62b über die Verbindungskomponenten 114a, 116a und 118a und/oder 114b, 116b und 118b gefördert/verschoben werden.

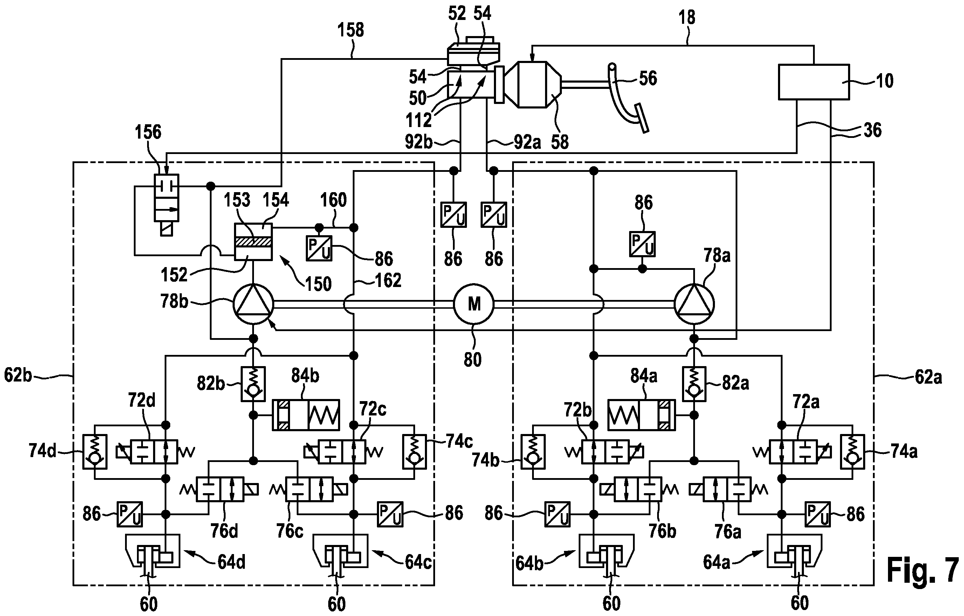

Fig. 7 zeigt eine schematische Darstellung eines weiteren hydraulischen Bremssystems, welches nicht von der vorliegenden Erfindung umfasst wird.

Das in Fig. 7 schematisch wiedergegebene Bremssystem weist anstelle eines Plungers einen Zwei-Kammern-Zylinder 150 in dem zweiten Bremskreis 62b auf. In einer Weiterbildung des dargestellten Bremssystems kann auch der erste Bremskreis 62a mit einem derartigen Zwei-Kammern-Zylinder ausgestattet werden.

Der Zwei-Kammern-Zylinder 150 umfasst eine erste Kammer 152 und eine zweite Kammer 154. Eine Trennwand zwischen den beiden Kammern 152 und 154 umfasst ein verschiebbares Trennelement 153, so dass ein Gesamtvolumen der beiden Kammern 152 und 154 bei einer Vergrößerung/Verkleinerung einer der beiden Kammern 152 und 154 konstant bleibt. Die erste Kammer 152 ist zu einer Förderseite der Pumpe 78b des zweiten Bremskreises 62b ausgerichtet. Über ein Betreiben der Pumpe 78b ist somit ein Bremsmediumvolumen in die erste Kammer 152 des Zwei-Kammern-Zylinders 150 pumpbar. Des Weiteren ist eine Öffnung der ersten Kammer 152 über ein Ventil 156 mit einer Reservoirleitung 158 verbunden, welche in das Bremsmediumreservoir 52 mündet. Somit kann bei einem Vorliegen des Ventils 156 in einem geöffneten Zustand ein Bremsmediumvolumen aus der ersten Kammer 152 in das speicherexterne Restvolumen des zweiten Bremskreis 62b strömen.

Die zweite Kammern 154 des Zwei-Kammern-Zylinders 150 ist über eine Zwischenleitung 160 an eine Leitung 162 gekoppelt, welche die Radeinlassventile 72c und 72d mit der Zufuhrleitung 92b verbindet. Somit kann bei einem geöffneten Umschaltventil 68b und geschlossenen Radeinlassventilen 72c und 72d ein Bremsmediumvolumen zwischen der zweiten Kammer 154 des Zwei-Kammern-Zylinders 150 und dem Hauptbremszylinder 50 verschoben werden.

Nachfolgend wird das vorteilhafte Zusammenwirken der Steuervorrichtung 10, des Zwei-Kammern-Zylinders 150, des Ventils 156 und der Pumpe 78b beschrieben. Über ein Öffnen des Ventils 156 kann eine hydraulische Verbindung zwischen dem Bremsmediumreservoir 52 und der ersten Kammer 152 des Zwei-Kammern-Zylinders 150 geöffnet werden. Somit kann das Bremsmedium über die geöffnete hydraulische Verbindung von der ersten Kammer 152 in das Bremsmediumreservoir 52 abfließen. Durch die entstehende Druckverminderung in der ersten Kammer 152 erfolgt ein Verschieben des Trennelements 153 zwischen den beiden Kammern 152 und 154. Die zweite Kammer nimmt somit ein bestimmtes Bremsmediumvolumen aus dem speicherexternen Volumen des zweiten Bremskreises 62b auf.

Durch ein Pumpen eines Bremsmediumvolumens in die erste Kammer 152 wird der Druck in dieser entsprechend erhöht. Durch die bewirkte Druckerhöhung wird das Trennelement 153 zwischen den Kammern 152 und 154, beispielsweise ein Kolben, verschoben. Dadurch entsteht ein Druckaufbau in der zweiten Kammer 154, welcher eine Volumenverschiebung aus der zweiten Kammer 154 in das speicherexterne Volumen bewirkt. Ein wesentlicher Vorteil der hier beschriebenen nichterfindungsgemäßen Technologie ist, dass die Pulsationen der Pumpe durch den als Dämpfer fungierenden Zwei-Kammern-Zylinder 150 reduziert/minimiert werden.

Der Bremskraftverstärker 58 ist in bevorzugter Ausführung derart an den Hauptbremszylinder 50 gekoppelt, dass bei einer Betätigung des Bremseingabeelements 56 durch den Fahrer eine Gesamtkraft aus zumindest der auf das Bremseingabeelement 56 ausgeübten Fahrerbremskraft und einer von dem Bremskraftverstärker 58 bereitgestellten Unterstützungskraft eine Druckänderung in dem Hauptbremszylinder 50 bewirken kann. Unter einer Kopplung ist hier nicht zwingend eine mechanische Verbindung zu verstehen, ebenso kann damit auch die Übertragung einer Kraft verstanden werden. Ebenso ist es möglich, dass der Bremskraftverstärker mittels einer Unterstützungskraft eine Druckänderung in dem Hauptbremszylinder 50 bewirken kann, ohne dass der Fahrer eine Fahrerbremskraft zur Gesamtkraft beisteuert.

## Patentansprüche

1. Verfahren zum Betreiben eines hydraulischen Bremssystems eines
Fahrzeugs,
wobei eine von einem fahrzeugeigenen Steuersystem bereitgestellten Vorgabe (14) bezüglich einer Soll-Druckänderung in mindestens einem über mindestens einen Bremskreis (62a, 62b) mit einem Hauptbremszylinder (50) verbundenen Radbremszylinder (64a bis 64d) des hydraulischen Bremssystems empfangen wird (S1),
wobei mindestens ein Abdichtelement (22) abhängig von der Vorgabe (14) in eine Abdichtstellung in Bezug zu mindestens einem Verbindungskanal (54) des Hauptbremszylinders (50) zu einem Bremsmediumreservoir (52) des hydraulischen Bremssystems verstellt wird (S2),
wobei eine Soll-Fördergröße (32) für mindestens ein Bremsmedium-Förderelement (30, 88a, 88'a, 88b, 90) des hydraulischen Bremssystems zum Fördern eines Bremsmediumvolumens zwischen mindestens einem Speichervolumen (100) des hydraulischen Bremssystems und einem speicherexternen Volumen des mindestens einen Bremskreises (62a, 62b) unter Berücksichtigung der empfangenen Vorgabe (14) festgelegt wird (S3), und
wobei das mindestens eine Bremsmedium-Förderelement (30, 88a, 88'a, 88b, 90) entsprechend der festgelegten Soll-Fördergröße (32) angesteuert wird (S4),
**dadurch gekennzeichnet, dass**
das mindestens eine Abdichtelement (22) mittels eines an das mindestens eine Abdichtelement (22) mechanisch ankoppelbaren elektrischen Motors (20) eines elektromechanischen Bremskraftverstärkers (58) des hydraulischen Bremssystems, welcher in eine Stellung verfahrbar ist, in welcher ein mechanischer Kontakt zwischen dem elektrischen Motor (20) und dem mindestens einen Abdichtelement (22) vorliegt, in die Abdichtstellung verstellt wird; und
als das mindestens eine Bremsmedium-Förderelement (88a, 88'a, 88b, 90) mindestens ein Plunger (88a, 88'a, 88b, 90) derart angesteuert wird, dass ein der festgelegten Soll-Fördergröße (32) entsprechendes IST-Bremsmediumvolumen zwischen mindestens einer Plunger-Speicherkammer (100) als dem mindestens einen Speichervolumen (100) und dem speicherexternen Volumen des mindestens einen Bremskreises verschoben wird.

2. Verfahren nach Anspruch 1, wobei das mindestens eine Abdichtelement (22) derart in die Abdichtstellung verstellt wird, dass die mindestens eine Schnüffelbohrung (112) des Hauptbremszylinders (50) abgedeckt wird.

3. Verfahren nach einem der vorhergehenden Ansprüche, mit den zusätzlichen Schritten:
Ermitteln einer zusätzlichen Fahrerbremsvorgabe bei einer Betätigung eines Bremseingabeelements (56) durch einen Fahrer des Fahrzeugs;
Festlegen einer Soll-Unterstützungskraftgröße bezüglich einer bereitzustellenden Unterstützungskraft (F_{U}) des elektromechanischen Bremskraftverstärkers (58) unter Berücksichtigung der Fahrerbremsvorgabe, sowie unter zusätzlicher Berücksichtigung der von dem fahrzeugeigenen Steuersystem bereitgestellten Vorgabe (14) und/oder der festgelegten Soll-Fördergröße (32); und
Ansteuern des elektromechanischen Bremskraftverstärkers (58) entsprechend der festgelegten Soll-Unterstützungskraftgröße.

4. Verfahren nach einem der vorhergehenden Ansprüche, wobei mittels des Verfahrens eine automatische Geschwindigkeitssteuerung, ein automatisches Notbremsprogramm, eine Bremsscheibenwischer-Funktion und/oder ein Vorbefüllen des mindestens einen Radbremszylinders (64a bis 64d) ausgeführt werden.

5. Steuervorrichtung (10) für ein hydraulisches Bremssystem eines Fahrzeugs mit:
einer Eingabeeinrichtung (12), welche dazu ausgelegt ist, eine von einem fahrzeugeigenen Steuersystem bereitgestellte Vorgabe (14) bezüglich einer Soll-Druckänderung in mindestens einem über mindestens einen Bremskreis (62a, 62b) mit einem Hauptbremszylinder (50) verbundenen Radbremszylinder (64a bis 64d) des hydraulischen Bremssystems zu empfangen;
einer ersten Ansteuereinrichtung (16), welche mittels der Eingabeeinrichtung (12) derart ansteuerbar ist, dass die erste Ansteuereinrichtung (16) nach einem Empfangen der Vorgabe (14) durch die Eingabeeinrichtung (12) ein erstes Steuersignal (18) an eine Bremssystemkomponente ausgibt, wobei die Bremssystemkomponente mittels des ersten Steuersignals (18) so ansteuerbar ist, dass mindestens ein steuervorrichtungsexternes Abdichtelement (22), welches benachbart zu mindestens einem Verbindungskanal (54) des Hauptbremszylinders (50) zu einem Bremsmediumreservoir (52) des hydraulischen Bremssystems angeordnet ist, in eine Abdichtstellung in Bezug zu dem mindestens einen Verbindungskanal (54) verstellbar ist;
einer Auswerteeinrichtung (26), welche dazu ausgelegt ist, eine Soll-Fördergröße (32) für mindestens ein Bremsmedium-Förderelement (30, 88a, 88'a, 88b, 90) des hydraulischen Bremssystems zum Fördern eines Bremsmediumvolumens zwischen mindestens einem Speichervolumen (100) des hydraulischen Bremssystems und einem speicherexternen Volumen des mindestens einen Bremskreises (62a und 62b) unter Berücksichtigung der empfangenen Vorgabe (14) festzulegen; und
einer zweiten Ansteuereinrichtung (34), welche dazu ausgelegt ist, ein zweites Steuersignal (36) entsprechend der festgelegten Soll-Fördergröße (32) an das mindestens eine Bremsmedium-Förderelement (30, 88a, 88'a, 88b, 90) auszugeben,
**dadurch gekennzeichnet, dass**
die erste Ansteuereinrichtung (16) dazu ausgelegt ist, mittels des ersten Steuersignals (18) einen elektrischen Motor (20) eines elektromechanischen Bremskraftverstärkers, welcher mechanisch an das mindestens eine benachbart zu dem mindestens einen Verbindungskanal (54) angeordnete Abdichtelement (22) ankoppelbar ist, indem der elektrische Motor (20) in eine Stellung verfahrbar ist, in welcher ein mechanischer Kontakt zwischen dem Motor (20) und dem mindestens einen Abdichtelement (22) vorliegt, als die Bremssystemkomponente so anzusteuern, dass das mindestens eine Abdichtelement (22) in die Abdichtstellung in Bezug zu dem mindestens einen Verbindungskanal (54) verstellbar ist; und
als das mindestens eine Bremsmedium-Förderelement (88a, 88'a, 88b, 90) mindestens ein Plunger (88a, 88'a, 88b, 90) mittels der zweiten Ansteuereinrichtung (34) derart ansteuerbar ist, dass ein der festgelegten Soll-Fördergröße (32) entsprechendes IST-Bremsmediumvolumen zwischen mindestens einer Plunger-Speicherkammer (100) als dem mindestens einen Speichervolumen (100) und dem speicherexternen Volumen des mindestens einen Bremskreises verschiebbar ist.

6. Steuervorrichtung (10) nach Anspruch 5, wobei das Steuersystem ein automatisches Geschwindigkeits-Steuersystem, ein automatisches Sicherheitssystem, welches dazu ausgelegt ist, bei einem Erkennen einer möglichen Unfallsituation das zugehörige Fahrzeug automatisch abzubremsen, ein Bremsscheibenwischer und/oder ein Bremse-Vorbefüller ist.

7. Hydraulisches Bremssystem für ein Fahrzeug mit:
einem Hauptbremszylinder (50);
mindestens einem über mindestens einen Bremskreis (62a, 62b) mit dem Hauptbremszylinder (50) verbundenen Radbremszylinder (64a bis 64d);
einem über mindestens einen Verbindungskanal (54) mit dem Hauptbremszylinder (50) verbundenen Bremsmediumreservoir (52);
einem elektromechanischen Bremskraftverstärker (58) mit einem elektrischen Motor (20), ankoppelbar an mindestens ein Abdichtelement (22), indem der elektrische Motor (20) in eine Stellung verfahrbar ist, in welcher ein mechanischer Kontakt zwischen dem Motor (20) und dem mindestens einen Abdichtelement (22) vorliegt, mittels welchem das mindestens eine Abdichtelement (22) in eine Abdichtstellung in Bezug zu dem mindestens einen Verbindungskanal (54) verstellbar ist;
mindestens einem Speichervolumen (100) und mindestens einem Bremsmedium-Förderelement (30, 88a, 88'a, 88b, 90), mittels welchem ein Bremsmediumvolumen zwischen dem mindestens einen Speichervolumen (100) und einem speicherexternen Volumen des mindestens einen Bremskreises (62a, 62b) verschiebbar ist, wobei das hydraulische Bremssystem mindestens einen Plunger (88a, 88'a, 88b, 90) mit mindestens einer Plunger-Speicherkammer (100) als das mindestens eine Bremsmedium-Förderelement (88a, 88'a, 88b, 90) und als dem mindestens einen Speichervolumen (100) umfasst; und
einer Steuervorrichtung (10) nach Anspruch 5 oder 6.

8. Hydraulisches Bremssystem nach Anspruch 7, wobei der mindestens eine Plunger (88'a) eine selbsthemmende Ankopplung (110) einer verstellbaren Wandkomponente (102) einer Plunger-Speicherkammer (100) an einen Plunger-Motor (104) umfasst.

9. Hydraulisches Bremssystem nach Anspruch 7 oder 8, wobei das hydraulische Bremssystem mindestes eine eingangsseitig an dem mindestens einen zugeordneten Plunger (88a) angeordnete Ventileinheit (108) umfasst.

10. Hydraulisches Bremssystem nach einem der Anspruch 7 bis 9, wobei das hydraulische Bremssystem zusätzlich eine Bremskraftverstärker-Steuereinheit umfasst, welche dazu ausgelegt ist, eine Soll-Unterstützungskraftgröße bezüglich einer bereitzustellenden Unterstützungskraft (F_{U}) des elektromechanischen Bremskraftverstärkers (58) unter Berücksichtigung einer von einem Bremseingabeelement-Sensor bereitgestellten Fahrerbremsvorgabe, sowie unter zusätzlicher Berücksichtigung der von dem fahrzeugeigenen Steuersystem bereitgestellten Vorgabe (14) und/oder der Soll-Fördergröße (32) festzulegen und ein der Soll-Unterstützungskraftgröße entsprechendes drittes Steuersignal an einen elektrischen Motor (20) des elektromechanischen Bremskraftverstärkers (58) auszugeben.

## Claims

1. Method for operating a hydraulic brake system of a
vehicle,
wherein a predefined value (14) which is made available by a vehicle-mounted control system and related to a set point change in pressure is received in at least one wheel brake cylinder (64a to 64d), connected to a master brake cylinder (50) via at least one brake circuit (62a, 62b), of the hydraulic brake system (S1),
wherein at least one sealing element (22) is adjusted as a function of the predefined value (14) to a sealing position with respect to at least one connecting duct (54) of the master brake cylinder (50) leading to a braking medium reservoir (52) of the hydraulic brake system (S2),
wherein a set point feed variable (32) for at least one braking medium feed element (30, 88a, 88'a, 88b, 90) of the hydraulic brake system is defined for the feeding of a braking medium volume between at least one storage volume (100) of the hydraulic brake system and a storage-external volume of the at least one brake circuit (62a, 62b) while taking into account the received predefined value (14) (S3), and
wherein the at least one braking medium feed element (30, 88a, 88'a, 88b, 90) is actuated in accordance with the defined set point feed variable (32) (S4),
**characterized in that**
the at least one sealing element (22) is moved by means of an electric motor (20), which can be mechanically coupled to the at least one sealing element (22), of an electromechanical brake booster (58) of the hydraulic brake system, which can be moved into a position in which mechanical contact is present between the electric motor (20) and the at least one sealing element (22), into the sealing position; and
at least one plunger (88a, 88'a, 88b, 90) is actuated as the at least one braking medium feed element (88a, 88'a, 88b, 90) in such a way that an ACT braking medium volume, corresponding to the defined set point feed variable (32), is moved between at least one plunger storage chamber (100) as the at least one storage volume (100) and the storage-external volume of the at least one brake circuit.

2. Method according to Claim 1, wherein the at least one sealing element (22) is adjusted into the sealing position in such a way that the at least one breather bore (112) of the master brake cylinder (50) is covered.

3. Method according to one of the preceding claims, having the additional steps:
determining an additional driver's braking predefined value during activation of a brake input element (56) by a driver of the vehicle;
defining a set point boosting force variable with respect to a boosting force (Fᵤ), to be made available, by the electromechanical brake booster (58) taking into account the driver's braking predefined value and additionally taking into account the predefined value (14) made available by the vehicle-mounted control system and/or the defined set point feed variable (32); and
actuating the electromechanical brake booster (58) in accordance with the defined set point boosting force variable.

4. Method according to one of the preceding claims, wherein an automatic cruise control process, an automatic emergency braking program, a brake disc wiper function and/or prefilling of the at least one wheel brake cylinder (64a to 64d) are carried out by means of the method.

5. Control device (10) for a hydraulic brake system of a vehicle, having:
an input device (12) which is configured to receive a predefined value (14) which is made available by a vehicle-mounted control system and relates to a set point change in pressure in at least one wheel brake cylinder (64a to 64d), connected to a master brake cylinder (50) via at least one brake circuit (62a, 62b), of the hydraulic brake system;
a first actuation device (16) which can be actuated by means of the input device (12) in such a way that after reception of the predefined value (14) by the input device (12) the first actuation device (16) outputs a first control signal (18) to a brake system component, wherein the brake system component can be actuated by means of the first control signal (18) in such a way that at least one control-device-external sealing element (22), which is arranged adjacent to at least one connecting duct (54) of the master brake cylinder (50) leading to a braking medium reservoir (52) of the hydraulic brake system can be adjusted to a sealing position with respect to the at least one connecting duct (54);
an evaluation device (26) which is configured to define a set point feed variable (32) for at least one braking medium feed element (30, 88a, 88'a, 88b, 90) of the hydraulic brake system for feeding a braking medium volume between at least one storage volume (100) of the hydraulic brake system and one storage-external volume of the at least one brake circuit (62a and 62b) taking into account the received predefined value (14); and
a second actuation device (34) which is configured to output a second control signal (36) in accordance with the defined set point feed variable (32) to the at least one braking medium feed element (30, 88a, 88'a, 88b, 90),
**characterized in that**
the first actuation device (16) is configured to actuate, by means of the first control signal (18), an electric motor (20) of an electromechanical brake booster which can be mechanically coupled to the at least one sealing element (22) arranged adjacent to the at least one connecting duct (54), by being able to move the electric motor (20) into a position in which mechanical contact is present between the motor (20) and the at least one sealing element (22), as the brake system component in such a way that the at least one sealing element (22) can be adjusted to the sealing position with respect to the at least one connecting duct (54); and
at least one plunger (88a, 88'a, 88b, 90) can be actuated as the at least one braking medium feed element (88a, 88'a, 88b, 90) by means of the second actuation device (34) in such a way that an ACT braking medium volume which corresponds to the defined set point feed variable (32) can be moved between at least one plunger storage chamber (100) as the at least one storage volume (100) and the storage-external volume of the at least one brake circuit.

6. Control device (10) according to Claim 5, wherein the control system is an automatic cruise control system, an automatic safety system, which is configured to brake automatically the associated vehicle if a possible accident situation is detected, a brake disc wiper and/or a brake pre-filler.

7. Hydraulic brake system for a vehicle, having:
a master brake cylinder (50);
at least one wheel brake cylinder (64a to 64d) connected to the master brake cylinder (50) via at least one brake circuit (62a, 62b);
a braking medium reservoir (52) connected to the master brake cylinder (50) via at least one connecting duct (54);
an electromechanical brake booster (58) having an electric motor (20), which can be coupled to at least one sealing element (22) by being able to move the electric motor (20) into a position in which mechanical contact is present between the motor (20) and the at least one sealing element (22), by means of which brake booster (58) the at least one sealing element (22) can be adjusted to a sealing position with respect to the at least one connecting duct (54);
at least one storage volume (100) and at least one braking medium feed element (30, 88a, 88'a, 88b, 90), by means of which a braking medium volume can be moved between the at least one storage volume (100) and a storage-external volume of the at least one brake circuit (62a, 62b), wherein the hydraulic brake system comprises at least one plunger (88a, 88'a, 88b, 90) with at least one plunger storage chamber (100) as the at least one braking medium feed element (88a, 88'a, 88b, 90) and as the at least one storage volume (100) ; and
a control device (10) according to Claim 5 or 6.

8. Hydraulic brake system according to Claim 7, wherein the at least one plunger (88'a) comprises a self-locking coupling (110) of an adjustable wall component (102) of a plunger storage chamber (100) to a plunger motor (104).

9. Hydraulic brake system according to Claim 7 or 8, wherein the hydraulic brake system comprises at least one valve unit (108) which is arranged on the input side on the at least one assigned plunger (88a).

10. Hydraulic brake system according to one of Claims 7 to 9, wherein the hydraulic brake system additionally comprises a brake booster control unit which is configured to define a set point boosting force variable with respect to a boosting force (Fᵤ), to be made available, by the electromechanical brake booster (58) taking into account a driver's braking predefined value made available by a brake input element sensor, and additionally taking into account the predefined value (14) made available by the vehicle-mounted control system and/or the set point feed variable (32), and to output a third control signal, corresponding to the set point boosting force variable, to an electric motor (20) of the electromechanical brake booster (58).

## Revendications

1. Procédé permettant de faire fonctionner un système de freinage hydraulique d'un véhicule ;
une instruction (14) mise à disposition par un système de commande propre au véhicule étant reçue par rapport à une variation de pression théorique dans au moins un cylindre de frein de roue (64a à 64d), relié à un maître-cylindre de frein (50) via au moins un circuit de freinage (62a, 62b), du système de freinage hydraulique (S1) ;
au moins un élément d'étanchéité (22) étant déplacé par rapport à un réservoir d'agent de freinage (52) du système de freinage hydraulique en fonction de l'instruction (14) dans une position d'étanchéité par rapport à au moins un canal de liaison (54) du maître-cylindre de frein (50) (S2) ;
une grandeur d'extraction théorique (32) étant déterminée pour au moins un élément d'extraction d'agent de freinage (30, 88a, 88'a, 88b, 90) du système de freinage hydraulique pour extraire un volume d'agent de freinage entre au moins un volume d'accumulation (100) du système de freinage hydraulique et un volume externe à l'accumulateur de l'au moins un circuit de freinage (62a, 62b) en tenant compte de l'instruction (14) reçue (S3) ; et
l'au moins un élément d'extraction d'agent de freinage (30, 88a, 88'a, 88b, 90) étant commandé en fonction de la grandeur d'extraction théorique (32) déterminée (S4) ;
**caractérisé en ce que** :
l'au moins un élément d'étanchéité (22) peut être déplacé, à l'aide d'un moteur électrique (20), pouvant être couplé de façon mécanique à l'au moins un élément d'étanchéité (22), d'un amplificateur de force de freinage (58) électromécanique du système de freinage hydraulique, dans une position dans laquelle un contact mécanique est présent entre le moteur électrique (20) et l'au moins un élément d'étanchéité (22), déplacé dans la position d'étanchéité ; et
au moins un piston-plongeur (88a, 88'a, 88b, 90) prenant la forme de l'au moins un élément d'extraction d'agent de freinage (88a, 88'a, 88b, 90) étant commandé de telle sorte qu'un volume d'agent de freinage réel correspondant à la grandeur d'extraction théorique (32) déterminée est poussé entre au moins une chambre d'accumulation de piston-plongeur (100) sous la forme de l'au moins un volume d'accumulation (100) et du volume externe d'accumulateur de l'au moins un circuit de freinage.

2. Procédé selon la revendication 1, l'au moins un élément d'étanchéité (22) étant déplacé de telle sorte dans la position d'étanchéité que l'au moins un alésage de reniflement (112) du maître-cylindre de frein (50) est recouvert.

3. Procédé selon l'ûne quelconque des revendications précédentes, avec les étapes supplémentaires :
détermination d'une instruction de freinage de conducteur supplémentaire en présence d'un actionnement d'un élément d'entrée de frein (56) par un conducteur du véhicule ;
constatation d'une grandeur de force de soutien théorique par rapport à une force de soutien (F_{U}) de l'amplificateur de force de freinage (58) électromécanique à mettre à disposition en tenant compte de l'instruction de freinage de conducteur, ainsi qu'en tenant compte en sus de l'instruction (14) mise à disposition par le système de commande propre au véhicule et/ou par la grandeur d'extraction théorique (32) déterminée ; et
commande de l'amplificateur de force de freinage (58) électromécanique en fonction de la grandeur de force de soutien théorique électromécanique.

4. Procédé selon l'une quelconque des revendications précédentes, un programme de freinage d'urgence automatique, une fonction d'essuie-glace de frein et/ou un préremplissage de l'au moins un cylindre de frein de roue (64a à 64d) étant réalisés par déplacement de l'élément de commande automatique de vitesse.

5. Dispositif de commande (10) de système de freinage hydraulique d'un véhicule avec :
un dispositif d'entrée (12) conçu pour recevoir une instruction (14) mise à disposition par un système de commande propre au véhicule par rapport à une variation de pression théorique dans au moins un cylindre de frein de roue (64a à 64d), relié à un maître-cylindre de frein (50) via au moins un circuit de freinage (62a, 62b), du système de freinage hydraulique ;
un premier dispositif de commande (16) pouvant être commandé de telle sorte, à l'aide du dispositif d'entrée (12), que le premier dispositif de commande (16) envoie, après réception de l'instruction (14) par le dispositif d'entrée (12), un premier signal de commande (18) à un composant du système de freinage, le composant du système de freinage étant commandé à l'aide du premier signal de commande (18) de telle sorte qu'au moins un élément d'étanchéité (22) externe au dispositif de commande disposé à proximité d'au moins un canal de liaison (54) du maître-cylindre de frein (50) par rapport à un réservoir d'agent de freinage (52) du système de freinage hydraulique peut être déplacé dans une position d'étanchéité par rapport au l'au moins un canal de liaison (54) ;
un dispositif d'analyse (26) conçu pour déterminer une grandeur d'extraction théorique (32) pour au moins un élément d'extraction d'agent de freinage (30, 88a, 88'a, 88b, 90) du système de freinage hydraulique pour extraire un volume d'agent de freinage entre au moins un volume d'accumulation (100) du système de freinage hydraulique et un volume externe à l'accumulateur de l'au moins un circuit de freinage (62a et 62b) en tenant compte de l'instruction (14) reçue ; et
un deuxième dispositif de commande (34) conçu pour envoyer à l'au moins un élément d'extraction d'agent de freinage (30, 88a, 88'a, 88b, 90) un deuxième signal de commande (36) en fonction de la grandeur d'extraction théorique (32) déterminée ;
**caractérisé en ce que** :
le premier dispositif de commande (16) est conçu pour commander, à l'aide du premier signal de commande (18), de telle sorte un moteur électrique (20) d'amplificateur de force de freinage électromécanique pouvant être couplé de façon mécanique à l'au moins un élément d'étanchéité (22) disposé à côté de l'au moins un canal de liaison (54) en déplaçant le moteur électrique (20) dans une position dans laquelle un contact mécanique est présent entre le moteur (20) et l'au moins un élément d'étanchéité (22), sous la forme du composant du système de freinage, que l'au moins un élément d'étanchéité (22) peut être déplacé dans la position d'étanchéité par rapport à l'au moins un canal de liaison (54) ; et
au moins un piston-plongeur (88a, 88'a, 88b, 90) prenant la forme de l'au moins un élément d'extraction d'agent de freinage (88a, 88'a, 88b, 90) pouvant être commandé à l'aide du deuxième dispositif de commande (34) de telle sorte qu'un volume d'agent de freinage réel correspondant à la grandeur d'extraction théorique (32) déterminée peut être déplacé entre au moins une chambre d'accumulation de piston-plongeur (100) sous la forme de l'au moins un volume d'accumulation (100) et du volume externe d'accumulateur de l'au moins un circuit de freinage.

6. Dispositif de commande (10) selon la revendication 5, le système de commande étant un système de commande de vitesse automatique, un système de sécurité automatique conçu pour freiner automatiquement le véhicule associé en cas d'identification d'une possible situation d'accident, un essuie-glace de disque de frein et/ou un système de pré-remplissage de frein.

7. Système de freinage hydraulique pour un véhicule avec :
un maître-cylindre de frein (50) ;
au moins un cylindre de frein de roue (64a à 64d) relié au maître-cylindre de frein (50) via au moins un circuit de freinage (62a, 62b) ;
un réservoir d'agent de freinage (52) relié au maître-cylindre de frein (50) via au moins un canal de liaison (54) ;
un amplificateur de force de freinage (58) électromécanique avec un moteur électrique (20) pouvant être couplé à au moins un élément d'étanchéité (22) en déplaçant le moteur électrique (20) dans une position dans laquelle un contact mécanique est présent entre le moteur (20) et l'au moins un élément d'étanchéité (22), à l'aide duquel l'au moins un élément d'étanchéité (22) peut être déplacé dans une position d'étanchéité par rapport à l'au moins un canal de liaison (54) ;
au moins un volume d'accumulation (100) et au moins un élément d'extraction d'agent de freinage (30, 88a, 88'a, 88b, 90) à l'aide duquel un volume d'agent de freinage peut être déplacé entre l'au moins un volume d'accumulation (100) et un volume externe à l'accumulateur de l'au moins un circuit de freinage (62a, 62b), le système de freinage hydraulique comprenant au moins un piston-plongeur (88a, 88'a, 88b, 90) avec au moins une chambre d'accumulation de piston-plongeur (100) réalisée sous la forme de l'au moins un élément d'extraction d'agent de freinage (88a, 88'a, 88b, 90) et de l'au moins un volume d'accumulation (100) ; et
un dispositif de commande (10) selon la revendication 5 ou 6.

8. Système de freinage hydraulique selon la revendication 7, l'au moins un piston-plongeur (88'a) comprenant un couplage (110) autobloquant d'un composant de paroi (102) mobile de chambre d'accumulation de piston-plongeur (100) au niveau d'un moteur à piston-plongeur (104).

9. Système de freinage hydraulique selon la revendication 7 ou 8, le système de freinage hydraulique comprenant au moins une unité de soupape (108) disposée du côté d'entrée au niveau de l'au moins un piston-plongeur (88a) associé.

10. Système de freinage hydraulique selon l'une quelconque des revendications 7 à 9, le système de freinage hydraulique comprenant en outre une unité de commande d'amplificateur de force de freinage conçue pour déterminer une grandeur de force de soutien théorique par rapport à une force de soutien (Fu) de l'amplificateur de force de freinage (58) électromécanique à mettre à disposition en tenant compte d'une instruction de freinage de conducteur mise à disposition par un capteur d'élément d'entrée de frein, ainsi qu'en tenant compte en outre de l'instruction (14) mise à disposition par le système de commande propre au véhicule et/ou de la grandeur d'extraction théorique (32) et pour envoyer à un moteur électrique (20) de l'amplificateur de force de freinage (58) électromécanique un troisième signal de commande correspondant à la grandeur de force de soutien théorique.
